# EUROPEAN PATENT APPLICATION

(11) **EP 2 860 419 A2**
(43) Date of publication of application: **15.04.2015**
(21) Application number: 14187673.0
(22) Date of filing: 03.10.2014
(51) Int. Cl.: F16D 1/08, F16D 1/108, F16D 3/38, F16D 1/10

(54) **Device for mutual retention and disengagement between a shaft and the hub of an articulation fork**

(30) Priority: 07.10.2013 IT MO20130031 U
(71) Applicant: Comer Industries S.p.A., 20145 Milano (IT)
(72) Inventor: Brunazzi, Achille, 42044 Gualtieri, Frazone Santa Vittoria RE (IT); Tondelli, Massimo, 42012 Campagnola Emilia RE (IT)
(74) Representative: Modiano, Micaela Nadia

(57) **Abstract**

A device (1) for mutual retention and disengagement between a shaft (3) and a hub (5) of an articulation fork (7), comprising a sleeve (9) that is fitted slidingly on the hub (5) and a spring (11) that is also fitted on the hub (5).

The hub (5) comprises at least one radial seat (19) that accommodates a respective locking ball (17), which can move along said radial seat (19) to exert a force for retaining the shaft (3) in the hub (5). The sleeve (9) comprises an annular collar (13) that protrudes radially toward the inside of the sleeve (9) and is adapted to engage an annular recess (15) provided in the hub (5).

The sleeve (9) can slide, in contrast to the axial thrust force exerted by the spring (11) on the sleeve (9), from a configuration for retention of the shaft (3), in which the annular collar (13) prevents the radial outward movement of the locking ball (17) in order to exert the force for retention of the shaft (3) in the hub (5), to a disengagement configuration, in which a portion of the annular collar (13) is anchored to a portion of the annular recess (15) and the locking ball (17) stops exerting the force for retention of the shaft (3) in the hub (5). The sleeve (9) can be off-centered axially with respect to the hub (5) in the transition from the retention configuration to the disengagement configuration due to the difference of the force exerted by an operator on the sleeve (9) in the step for transition from the retention configuration to the disengagement configuration.

## Description

The present invention relates to a device for mutual retention and disengagement between a shaft and the hub of an articulation fork.

In universal joint transmissions, various types of devices for connecting an articulation fork to a shaft are known. Some of these devices are based essentially on the presence of locking balls accommodated in radial seats provided in the hub of the articulation fork. By means of sleeves that can slide axially on the hub, such balls can be pressed toward the hollow inside of the hub, where the shaft is inserted, so as to protrude toward the inside of the hub and enter an adapted annular groove provided in the outer surface of the shaft, thus locking it with respect to said hub. The movement of the sleeve makes it possible to release the locking balls from their engagement with the annular groove of the shaft, allowing therefore its extraction from the hub. The sliding of the sleeve in an axial direction, for transition from a retention configuration to a disengagement configuration between the shaft and the hub, is achieved by the operator without any device adapted to keep the sleeve in said disengagement configuration.

In connecting a universal joint transmission and specifically during the insertion of the hub of said articulation forks on a shaft, the operator necessarily has to use at least one hand to keep the sleeve in the disengagement position, which leads to the difficulty of having to simultaneously support and engage the universal joint transmission in the shaft with only one hand.

In other known cases, the articulation fork is provided with devices that are more complex to manufacture and are adapted to retain the sleeve in the disengagement position, thus obviating what has been described above.

These devices of the known type are not free from drawbacks, which include the fact that they are particularly complicated and, since they comprise a plurality of movable components that interact with each other, they can jam, rendering the device unreliable over time.

A further drawback of some devices of the known type resides in the fact that they are hardly practical in use for the operator.

Another drawback of these devices of the known type resides in the fact that they are onerous to manufacture, both in terms of production of the various components and in terms of assembly thereof.

The aim of the present invention is to provide a device for mutual retention and disengagement between a shaft and the hub of an articulation fork that solves the technical problem described above, obviates the drawbacks and overcomes the limitations of the background art, since it is easier to manufacture and to use.

Within this aim, an object of the present invention is to provide a device that has a smaller number of mechanical components than devices of the known type.

Another object of the invention is to provide a device that can be used by the operator with maximum flexibility, practicality and convenience and is also straightforward to use.

A further object of the invention is to provide a device the few mechanical components of which do not tend to jam over time, ensuring considerable reliability and safety in use.

A further object of the invention is to provide a device that is economically competitive with devices of the known type.

This aim, these objects and others that will become more apparent hereinafter are achieved by a device for mutual retention and disengagement between a shaft and a hub of an articulation fork, comprising a sleeve that is fitted slidingly on said hub and a spring that is fitted on said hub, said hub comprising at least one radial seat that accommodates a respective locking ball, which can move along said radial seat to apply an action for retaining said shaft in said hub, said sleeve comprising an annular collar that protrudes radially toward the inside of said sleeve and is adapted to engage an annular recess provided in said hub, said sleeve being able to slide, in contrast to the axial thrust force exerted by said spring on said sleeve, from a configuration for retention of said shaft, in which said annular collar prevents a radial outward movement of said locking ball in order to exert said force for retention of said shaft in said hub, to a disengagement configuration, in which a portion of said annular collar is anchored to a portion of said annular recess and said locking ball stops exerting said force for retention of said shaft in said hub, said sleeve allowing axial off- centering with respect to said hub in a transition from said retention configuration to said disengagement configuration due to the difference of the force exerted by an operator on said sleeve in the step for transition from said retention configuration to said disengagement configuration.

Further characteristics and advantages of the present invention will become more apparent from the description of a preferred but not exclusive embodiment of a device for the mutual retention and disengagement of a shaft and the hub of an articulation fork, illustrated by way of non-limiting example with the aid of the accompanying drawings, wherein:

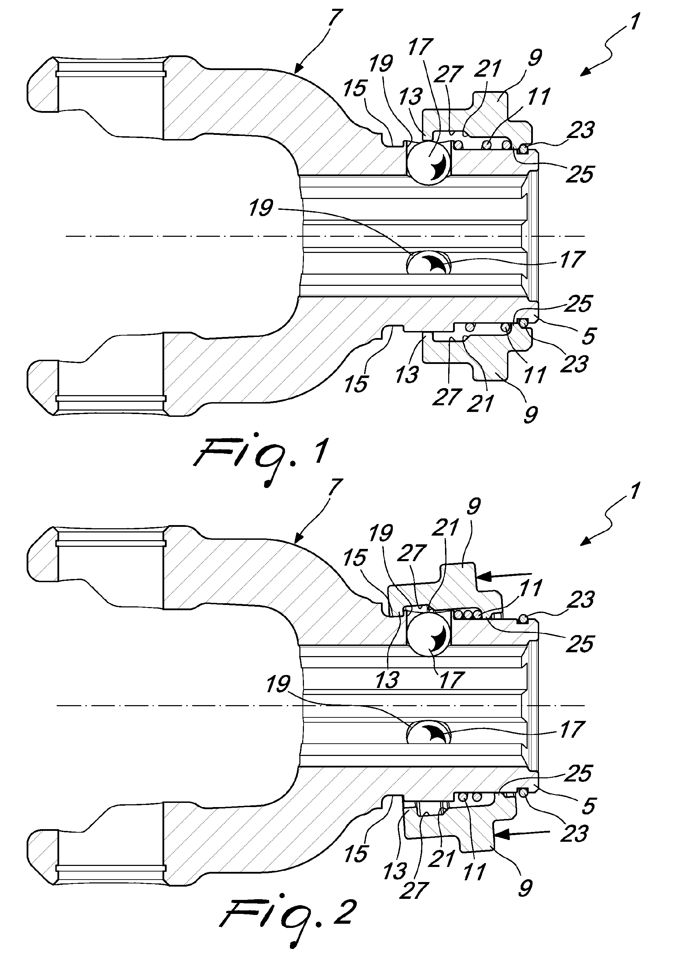

Figures 1 to 8 are sectional side views of an embodiment of a device according to the invention, illustrating in sequence the use thereof for the insertion and retention of a shaft in the hub of an articulation fork.

With reference to the cited figures, the device for mutual retention and disengagement between a shaft and the hub of an articulation fork is designated generally by the reference numeral 1.

The device 1 comprises a sleeve 9, which is fitted slidingly on the hub 5 of an articulation fork 7, and a spring 11, which also is fitted on the hub 5.

The hub 5 comprises at least one radial seat 19, which accommodates a locking ball 17, which can move substantially at right angles to the axis of the hub 5 within its own radial seat 19 in order to exert a force for retention of the shaft 3 in the hub 5.

The sleeve 9 comprises an annular collar 13, which protrudes radially toward the inside of the sleeve 9 and is adapted to engage an annular recess 15 that is provided externally in the hub 5.

The sleeve 9 can slide on the hub 5, in contrast to the axial thrust force applied by the spring 11, from a configuration for retention of the shaft 3, in which the annular collar 13 prevents the outward radial movement of the locking ball 17 in order to exert the force for retention of the shaft 3 in the hub 5, to a disengagement configuration, in which an arc-like portion of the annular collar 13 is anchored to an arc-like portion of the annular recess 15, and in which the locking ball 17 stops exerting the force for retention of the shaft 3 in the hub 5. Furthermore, the sleeve 9 can be off-centered axially with respect to the hub 5 in the transition from the retention configuration to the disengagement configuration, due to the difference of the force exerted by an operator on the sleeve 9 in the step for transition from the retention configuration to the disengagement configuration.

Preferably, there is a plurality of locking balls 17 and of respective radial seats 19. Conveniently, there are three locking balls 17 and three radial seats 19, distributed around the circumference of the hub 5.

Advantageously, furthermore, the radial translation of the locking ball 17 toward the outside, within the respective radial seat 19, is adapted to realign the axis of the sleeve 9 with the axis of the hub 5, so as to release the annular collar 13 from the anchoring within the recess 15.

The sleeve 9 is advantageously provided monolithically.

The hub 5 can advantageously comprise a retention ring 23, which is adapted to prevent the extraction of the sleeve 9 from the hub 5, for example due to the axial thrust applied by the spring 11 on the sleeve 9.

The internal surface of the sleeve 9 comprises advantageously at least one portion 21, which has, in cross-section, a profile that is inclined with respect to the axis of the sleeve 9. Said inclined portion 21 is adapted to engage the locking ball 17 in the transition of the sleeve 9 from the retention configuration to the disengagement configuration and vice versa.

The inside diameter of the sleeve 9, at the annular collar 13, is larger than the outside diameter of the hub 5 at the annular recess 15; this allows the axial off-centering of the sleeve 9 with respect to the hub 5.

Moreover, the sleeve 9 can comprise an annular heel 25, which acts both as a guide for the sliding of the sleeve 9 with respect to the hub 5 and as a fulcrum for the axial off-centering of the sleeve 9 with respect to the hub 5.

In the internal surface of the sleeve 9, furthermore advantageously an annular cavity 27 is defined that is adapted to accommodate the locking ball 17.

Operation of the device for mutual retention and disengagement between a shaft and the hub of an articulation fork is described hereinafter with reference to the sequence of Figures 1 to 8.

Figure 1 is a view of the device 1 in an initial inactive configuration, in which the sleeve 9 is pushed by the spring 11 against the retention ring 23. In this configuration, the annular collar 13 is arranged at the radial seats 19 and prevents the outward radial movement of the balls 17, which protrude toward the inside of the hub 5.

When the operator slides the sleeve 9 in the direction indicated by the arrows in Figure 2, in contrast to the resisting force of the spring 11, due to the natural difference of the force generated by the operator to contrast the resisting force of the spring 11, the sleeve 9 tends to become off-centered, i.e., to become inclined with respect to the axis of the hub 5, keeping the annular heel 25 as a fulcrum point, and an arc-like portion of the circular collar 13 is anchored to an arc-like portion of the annular recess 15 of the hub 5. In this configuration, thanks to the portion 21 with inclined profile of the internal surface of the sleeve 9, the locking balls 17 remain positioned radially inward.

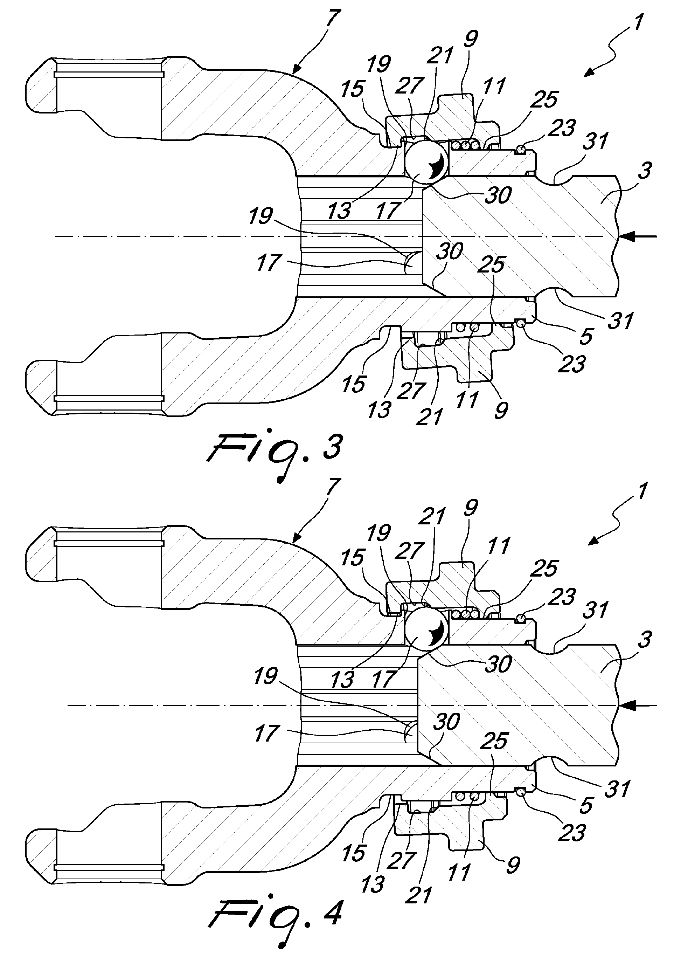

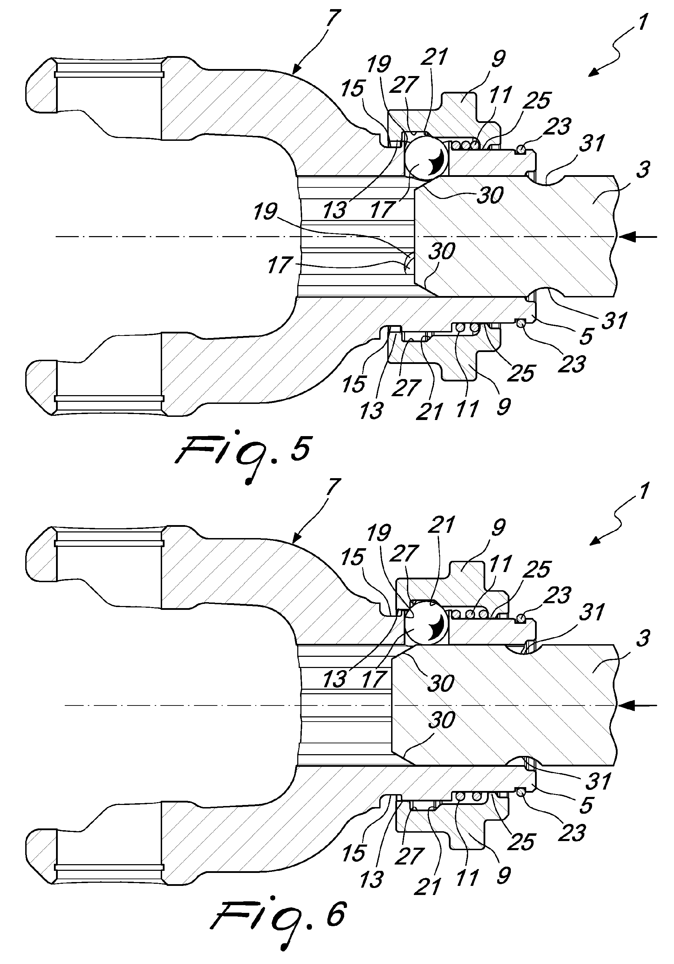

Figures 3 to 6 show subsequent steps of insertion of the shaft 3 in the hub 5, as indicated by the arrows. Due to the contact with the inclined surface 30 of the tip of the shaft 3, the locking balls 17 are progressively pushed radially outward and abut against the portion 21 with inclined profile of the internal surface of the sleeve 9, causing a re-centering thereof with respect to the axis of the hub 5, as shown in Figures 4 and 5. When the re-centering of the sleeve 9 has occurred, the annular collar 13 disengages from anchoring with the annular recess 15, as shown in Figure 5, and due to the axial thrust of the spring 11 the sleeve 9 tends to return to its initial position.

This return of the sleeve 9 to the initial position, however, is interrupted by the presence of the locking ball 17, as shown in Figure 6. The presence of the shaft 3 in the hub 5 in fact keeps the locking balls 17 protruding toward the outside of the hub 5, so that they are accommodated in the annular cavity 27 of the sleeve 9.

The shaft 3 is provided with an annular groove 31, which is adapted to accommodate the portions of the locking balls 17 that protrude within the hub 5.

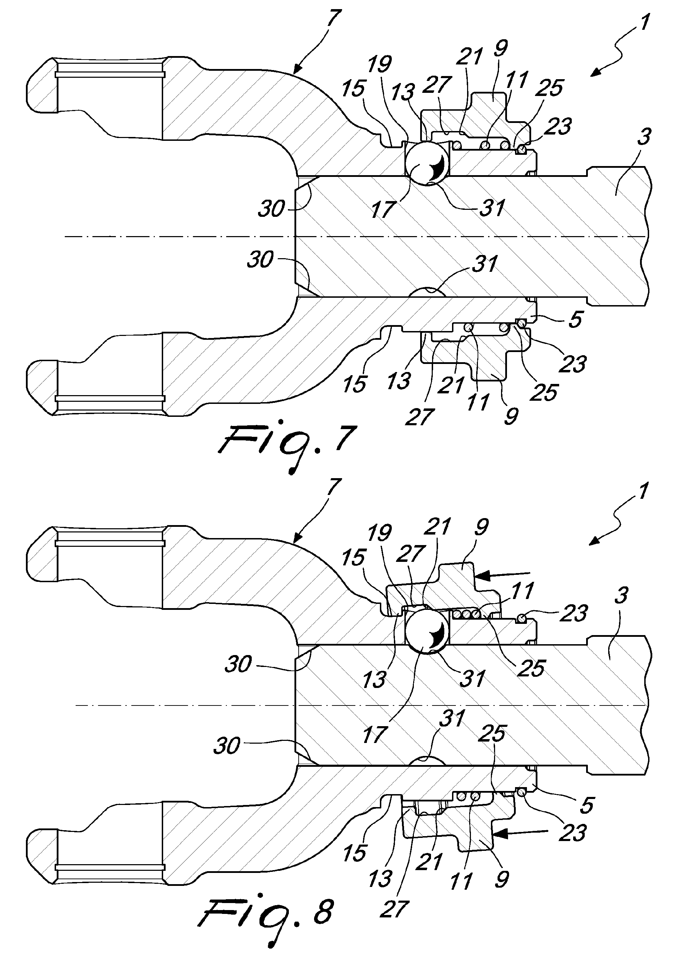

As shown in Figure 7, only when the shaft 3 is inserted in the hub 5 at such a depth as to align the annular groove 31 with the radial seats 19 and therefore with the locking balls 17, the locking balls 17 can protrude radially toward the inside of the hub 5, allowing the sleeve 9 to return to its initial position under the thrust of the spring 11. In this position of the sleeve 9, the annular collar 13 prevents the outward radial movement of the balls 17, so that said balls, accommodated in the annular groove 31, can exert their force for retaining the shaft 3 in the hub 5. In particular, when the annular groove 31 provided in the shaft 3 is aligned with the radial seats 19, the edge of the annular collar 13 that forms the annular cavity 27, i.e., the inner edge, closest to the balls 17, forces the balls 17, due to the axial thrust force generated by the spring 11, to move radially inward, in their radial seat 19, until they engage the annular groove 31 of the shaft 3.

The operation for disengagement of the shaft 3 from the hub 5 occurs by repeating first of all the axial movement of the sleeve 9, in contrast to the force of the spring 11, as shown in Figure 8, off-centering the sleeve 9 and anchoring it by means of the annular collar 13 to the annular recess 15 of the hub 5. In this configuration, the locking balls 17 are proximate to the portion 21 with an inclined profile of the internal surface of the sleeve 9. Removal of the shaft 3, due to the curvilinear surface of the annular groove 31, entails an outward radial movement of the locking balls 17, which, as already described in connection with the preceding steps, tend first to recenter the sleeve 9 and then to release it from anchoring with the annular recess 15 of the hub 5.

In practice it has been found that the device for mutual retention and disengagement between a shaft and the hub of an articulation fork according to the present invention achieves the intended aim and objects, since it is simpler to manufacture and to use.

Another advantage of the device according to the invention resides in that it comprises a minimal number of components while ensuring optimum functionality.

A further advantage of the device according to the invention resides in that it does not have mechanical components that can jam as a consequence of use over time.

Another advantage of the device according to the invention resides in that the anchoring of the sleeve to the hub of the articulation fork in order to insert or remove the shaft is achieved in a straightforward manner starting from the very action of the operator, to the full advantage of practicality in use.

The device for mutual retention and disengagement between a shaft and the hub of an articulation fork thus conceived is susceptible of numerous modifications and variations, all of which are within the scope of the appended claims.

All the details may furthermore be replaced with other elements of equal utility.

In practice, the materials used, so long as they are compatible with the specific use, as well as the contingent shapes and dimensions, may be any according to the requirements.

The disclosures in Italian Utility Model Application No. M02013U000031 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for mutual retention and disengagement between a shaft (3) and a hub (5) of an articulation fork (7), comprising a sleeve (9) that is fitted slidingly on said hub (5) and a spring (11) that is fitted on said hub (5), said hub (5) comprising at least one radial seat (19) that accommodates a respective locking ball (17), which can move along said radial seat (19) to apply an action for retaining said shaft (3) in said hub (5), said sleeve (9) comprising an annular collar (13) that protrudes radially toward the inside of said sleeve (9) and is adapted to engage an annular recess (15) provided in said hub (5), said sleeve (9) being able to slide, in contrast to the axial thrust force applied by said spring (11) on said sleeve (9), from a configuration for retention of said shaft (3), in which said annular collar (13) prevents a radial outward movement of said locking ball (17) in order to apply said action for retention of said shaft (3) in said hub (5), into a disengagement configuration, in which a portion of said annular collar (13) is anchored to a portion of said annular recess (15) and said locking ball (17) stops applying said action for retention of said shaft (3) in said hub (5), said sleeve (9) allowing its own axial off-centering with respect to said hub (5) in a transition from said retention configuration to said disengagement configuration due to the difference of the force applied by an operator on said sleeve (9) in the step for transition from said retention configuration to said disengagement configuration.

2. The device (1) according to claim 1, **characterized in that** the outward radial translation of said locking ball (17), within said radial seat (19), is adapted to realign the axis of said sleeve (9) with the axis of said hub (5), said realignment being adapted to release said annular collar (13) from anchoring with said portion of said annular recess (15).

3. The device (1) according to claims 1 and 2, **characterized in that** said sleeve (9) is provided monolithically.

4. The device (1) according to one or more of the preceding claims, **characterized in that** said hub (5) comprises a retention ring (23) that is adapted to prevent the extraction of said sleeve (9) from said hub (5).

5. The device (1) according to one or more of the preceding claims, **characterized in that** an internal surface of said sleeve (9) comprises at least one portion (21) that has, in cross-section, a profile that is inclined with respect to an axis of said sleeve (9) and is adapted to engage said locking ball (17) in the transition of said sleeve (9) from said retention configuration to said disengagement configuration and vice versa.

6. The device (1) according to one or more of the preceding claims, **characterized in that** an inside diameter of said sleeve (9) at said annular collar (13) is larger than an outside diameter of said hub (5) at said annular recess (15).

7. The device (1) according to one or more of the preceding claims, **characterized in that** said sleeve (9) comprises an annular heel (25) for guiding the sliding of said sleeve (9) with respect to said hub (5) and as a fulcrum for the axial off-centering of said sleeve (9) with respect to said hub (5).

8. The device (1) according to one or more of the preceding claims, **characterized in that** in the internal surface of said sleeve (9) there is an annular cavity (27) that is adapted to accommodate said locking ball (17).

9. The device (1) according to one or more of the preceding claims, **characterized in that** it comprises at least three locking balls (17) and at least three radial seats (19) distributed around the circumference of said hub (5).
